# EUROPÄISCHE PATENTSCHRIFT

(11) **EP 1 985 086 B1**
(45) Veröffentlichungstag und Bekanntmachung des Hinweises auf die Patenterteilung: **16.03.2016**
(21) Anmeldenummer: 06830684.4
(22) Anmeldetag: 18.12.2006
(51) Int. Cl.: H04L 29/06, H04W 80/04

(54) **VERFAHREN ZUR ÜBERMITTLUNG VON DATEN IN EINEM KOMMUNIKATIONSNETZ**
METHOD FOR TRANSFERRING DATA IN A COMMUNICATION NETWORK
PROCÉDÉ POUR TRANSMETTRE DES DONNÉES DANS UN RÉSEAU DE COMMUNICATION

(30) Priorität: 13.02.2006 DE 102006006549
(43) Veröffentlichungstag der Anmeldung: 29.10.2008
(73) Patentinhaber: Siemens Aktiengesellschaft, 80333 München (DE)
(72) Erfinder: FALK, Rainer, 85435 Erding (DE); KOHLMAYER, Florian, 82319 Starnberg (DE)
(86) Internationale Anmeldenummer: PCT/EP2006/069844
(87) Internationale Veröffentlichungsnummer: WO 2007/093245

(56) Entgegenhaltungen:
- FORSBERG (ED) NOKIA Y OHBA TOSHIBA B PATIL NOKIA H TSCHOFENIG SIEMENS A YEGIN SAMSUNG D: "PANA Mobility Optimizations" IETF STANDARD-WORKING-DRAFT, INTERNET ENGINEERING TASK FORCE, IETF, CH, Bd. pana, Nr. 1, 21. Oktober 2005 (2005-10-21), XP015042607 ISSN: 0000-0004
- FORSBERG NOKIA J BOURNELLE GET/INT R MARIN LOPEZ UNIVERSITY OF MURCIA D: "PANA Mobility Optimizations with Session Keys Context (SKC)" IETF STANDARD-WORKING-DRAFT, INTERNET ENGINEERING TASK FORCE, IETF, CH, 19. Oktober 2005 (2005-10-19), XP015042185 ISSN: 0000-0004
- BOURNELLE (ED) M LAURENT-MAKNAVICIUS GET/INT H TSCHOFENIG SIEMENS Y EL MGHAZLI ALCATEL G GIARETTA TILAB R LOPEZ UNIV OF MURCIA Y O: "Use of Context Transfer Protocol (CxTP) for PANA" IETF STANDARD-WORKING-DRAFT, INTERNET ENGINEERING TASK FORCE, IETF, CH, Nr. 2, 18. Februar 2005 (2005-02-18), XP015037647 ISSN: 0000-0004
- "Universal Mobile Telecommunications System (UMTS)" ETSI STANDARDS, EUROPEAN TELECOMMUNICATIONS STANDARDS INSTITUTE, SOPHIA-ANTIPO, FR, Bd. 3-SA3, Nr. V670, Dezember 2005 (2005-12), XP014032879 ISSN: 0000-0001

## Beschreibung

Die Erfindung betrifft ein Verfahren und eine Vorrichtung zur Übermittlung von Daten in einem Kommunikationsnetz.

Um die Kompatibilität und Interoperabilität von breitbandigen, drahtungebundenen Kommunikationsnetzen voranzutreiben, haben sich mehrere Interessenten in dem so genannten WiMax-Forum (www.wimaxforum.org) zusammengeschlossen. Ein Ziel dieses Forums ist, einen Standard zu erstellen, der es ermöglicht, dass mobile Kommunikationsendgeräte auf unterschiedliche Kommunikationsnetze zugreifen können.

Hierbei ist vorgesehen, dass bei einer Netzwerkanmeldung zur Authentifizierung eines Kommunikationsteilnehmers in einem Kommunikationsnetz das EAP-Protokoll (Extensible Authentication Protocol) verwendet wird. Hierbei wird in dem EAP-Protokoll neben der Authentifizierung auch ein kryptographischer Schlüssel abgeleitet, der zum Schutz der Kommunikation in dem Kommunikationsnetz herangezogen wird. Insbesondere wird die Kommunikation auf einer drahtungebundenen Übertragungsstrecke geschützt. Eine EAP-Protokoll basierte Kommunikations-Teilnehmerauthentifizierung wird heute unter anderem auch für einen sicheren Netzwerkzugang über WLAN oder bei einem PANA-basiertem Netzwerkzugang (Protocol for carrying Authentication for Network Access) verwendet.

Weiterhin ist vorgesehen, auf Grundlage des EAP-basierten Authentifizierung weiteres Schlüsselmaterial zu generieren und somit eine sichere Kommunikation des Kommunikationsteilnehmers mit weiteren Diensteservern in dem Kommunikationsnetz zu gewährleisten. Dies hat zur Folge, dass ein auf dem EAP-Protokoll basierender Authentifizierungsserver (AAA-Server) zu einem Schlüsselverteilserver wird. Falls beispielsweise ein Kommunikationsteilnehmer einen Dienst bei einem Diensteserver anfordert, verwendet er einen aus der EAP-Anmeldung abgeleiteten Schlüssel zum Schutz der Diensteanforderung. Zur Überprüfung der Diensteanforderung fordert der Diensteserver bei dem Authentisierungsserver diesen Schlüssel für den Kommunikationsteilnehmer an, der im Authentifizierungsserver auf Grundlage der während der Authentifizierungssitzung gespeicherten Daten erzeugt wird.

Problematisch hierbei ist, dass ein Kommunikationsteilnehmer die Möglichkeit hat, mehrere EAP-Authentifizierungen bei dem gleichen Authentifizierungsserver parallel vorzunehmen oder beispielsweise bei einer Re-Authentication kurz nacheinander folgend mehrere EAP-Authentifizierungen vorzunehmen, ohne dass die Gültigkeitsdauer der vorangehenden EAP-Authentifizierung bereits abgelaufen wäre. Weiterhin besteht die Möglichkeit, dass ein Kommunikationsteilnehmer gleichzeitig mehrere Geräte, wie beispielsweise PDA, Mobiltelefon oder Notebook nutzt und für jedes dieser Geräte eine EAP-Authentifizierung vornimmt. Des Weiteren hat der Kommunikationsteilnehmer die Möglichkeit, sich über unterschiedliche Authentifizierungs-Proxyserver in unterschiedlichen Kommunikationsnetzen gleichzeitig anzumelden, wie beispielsweise WLAN, 3GPP und WiMax-Netzen, die jedoch alle auf den gleichen Authentifizierungsserver des Heimatnetzes des Kommunikationsteilnehmers zurückgreifen.

Alle diese beschriebenen Szenarien haben zur Folge, dass für ein und denselben Kommunikationsteilnehmer aus unterschiedlichen EAP-Authentifizierungen bei dem gleichen Authentifizierungsserver mehrere gültige Schlüssel existieren. Problematisch hierbei ist insbesondere, dass für einen Diensteserver nicht ermittelbar ist, ob eine Menge unterschiedlicher Schlüssel von einem Kommunikationsteilnehmer stammt oder jeweils von unterschiedlichen Kommunikationsteilnehmern stammt. Dies führt unter Umständen dazu, dass aufgrund eines nicht ermittelbaren Schlüssels die Kommunikation abgebrochen bzw. eine Dienstanforderung abgewiesen wird. Dies kann auch dazu führen, dass der Diensteserver eine weitere Teilnehmer-Sitzung anlegt, wenn der Teilnehmer einen anderen, ebenfalls gültigen Schlüssel verwendet. Dies belegt unnötig Ressourcen auf dem Diensteserver, und dem Benutzer wird kein einheitlicher Dienst angeboten.

Eine Aufgabe der vorliegenden Erfindung ist es somit, ein Verfahren anzugeben, durch das von einem Authentifizierungsserver erhaltene Schlüssel einzelnen Kommunikationsteilnehmern zuordenbar sind und somit eine stabile Kommunikation in dem Kommunikationsnetz gewährleistet ist.

Erfindungsgemäß wird diese Aufgabe durch ein Verfahren, eine Authentifizierungseinrichtung sowie eine Vorrichtung mit den Merkmalen des Anspruchs 1, des Anspruchs 13 und des Anspruchs 14 gelöst. Vorteilhafte Weiterbildungen der vorliegenden Erfindung sind in den abhängigen Ansprüchen beschrieben.

In dem erfindungsgemäßen Verfahren zur Übermittlung von Daten in einem Kommunikationsnetz verfügt ein Kommunikationsteilnehmer über zumindest eine Kommunikationsteilnehmeridentität. Der Kommunikationsteilnehmer übermittelt zumindest eine Authentifizierungsnachricht, die die Kommunikationsteilnehmeridentität enthält, an eine Authentifizierungseinrichtung nach dem EAP-Protokoll (Extensible Authentification Protocol). Bei erfolgreicher Authentifizierung werden Informationen über den Kommunikationsteilnehmer in der Authentifizierungseinrichtung gespeichert. Ein dem Kommunikationsteilnehmer zuordenbares Kennzeichen wird von der Authentifizierungseinrichtung bei einer Übermittlung von Daten den weiteren Kommunikationsnetzelementen bereitgestellt. Die in der Authentifizierungseinrichtung gespeicherten Informationen des Kommunikationsteilnehmers können eine Information umfassen, dass der Kommunikationsteilnehmer erfolgreich authentisiert ist ("Session"), ein dem Kommunikationsteilnehmer zuordenbares Kennzeichen (soweit nicht schon vorhanden) und Schlüsselmaterial. Dies hat den Vorteil, dass einem weiteren Kommunikationsnetzelement, wie beispielsweise einem Diensteserver, ermöglicht wird, einen Kommunikationsteilnehmer, der unter Verwendung verschiedener Authentifizierungssitzungen bei ihm einen Dienst nutzen möchte, auch als den gleichen Kommunikationsteilnehmer zu behandeln. Dies funktioniert selbst dann, wenn der Kommunikationsteilnehmer gegenüber dem Diensteserver keinen ihm eindeutig zugeordneten Kommunikationsteilnehmeridentifizierer, wie beispielsweise einen NAI, Network Access Identifier, verwendet. Das von einer Authentifizierungseinrichtung bereitgestellte Schlüsselmaterial aus unterschiedlichen Authentifizierungssitzungen eines Benutzers kann somit durch den Diensteserver einem einzelnen Benutzer zugeordnet werden. Hierdurch kann der Benutzer Schlüsselmaterial aus einer beliebigen aktuell gültigen Authentifizierungssitzung verwenden, um eine Diensteanforderung bei einem Diensteserver sicher zu verschlüsseln.

Weiterhin ist es möglich, dass ein Kommunikationsteilnehmer für unterschiedliche Authentifizierungen jeweils einen unterschiedlichen Kommunikationsteilnehmeridentifizierer verwendet. Ebenso kann er die gleiche Authentifizierungsmethode zum Aufbau unterschiedlicher Authentifizierungen verwenden oder jeweils eine unterschiedliche Authentifizierungsmethode anwenden. Daher benötigt der Authentifizierungsserver Daten, die eine Zuordnung unabhängig von der verwendeten Authentifizierungsmethode oder dem verwendeten Kommunikationsteilnehmeridentifizierer zu dem jeweiligen Kommunikationsteilnehmer ermöglichen.

Gemäß einer Ausgestaltung der vorliegenden Erfindung übermittelt die Authentifizierungseinrichtung bei einer Anforderung von Daten des Kommunikationsteilnehmers durch ein weiteres Kommunikationsnetzelement die angeforderten Daten zusammen mit dem Kennzeichen des Kommunikationsteilnehmers. Dies hat die vorteilhafte Wirkung, dass für eine Diensteanforderung, für die der Diensteserver keinen passenden Schlüssel kennt, durch den Authentifizierungsserver der entsprechende Schlüssel zusammen mit der dem Kommunikationsteilnehmer zugeordneten Kennzeichen übermittelt wird. Selbst wenn der Kommunikationsteilnehmer in Anfragen an den Diensteserver mehrere oder nicht eindeutige Kommunikationsteilnehmeridentifizierer gegenüber dem Diensteserver verwendet, kann der Diensteserver über das dem Kommunikationsteilnehmer zugeordnete Kennzeichen die Anfragen einem Benutzer zuordnen. Da das einem Benutzer zuordenbare Kennzeichen einem Diensteserver übermittelt wird, ist die Privatsphäre des Teilnehmers besser geschützt; der Diensteserver kann damit nur erkennen, dass mehrere Anfragen von dem gleichen Benutzer gestellt wurden, aber ihm ist nicht die Identität des Benutzers bekannt. Es können auch mehrere Schlüssel durch den Authentifizierungsserver zurückgeliefert werden oder zusätzlich Informationen über den Schlüssel mitgeschickt werden, wie beispielsweise ein ihm zugeordneter Security-Parameterindex, eine Angabe mit welchen Sicherheitsverfahren er verwendet werden darf oder Zählerwerte für die Verwendung dieses Schlüssels. Der Diensteserver vergleicht die empfangenen Kennzeichen mit den ihm bereits bekannten Kennzeichen und ordnet die Diensteanforderung dem den Kennzeichen entsprechenden Kommunikationsteilnehmer zu. Ist das übermittelte Kennzeichen dem Diensteserver noch unbekannt, legt er eine neue Sitzung an. Die Diensteanforderung kann direkt mit dem übermittelten Schlüssel oder mit einem daraus abgeleiteten Schlüssel entschlüsselt werden. Der Schlüssel beziehungsweise der daraus abgeleitete Schlüssel kann wiederum zum Schutz der Diensteantwort des Diensteservers an den Kommunikationsteilnehmer verwendet werden.

Gemäß einer weiteren vorteilhaften Ausgestaltung der vorliegenden Erfindung übermittelt die Authentifizierungseinrichtung eine erste Nachricht mit dem Kennzeichen des Kommunikationsteilnehmers an eine oder eine Gruppe von weiteren Kommunikationsnetzelementen. Aufgrund der Nachricht werden vorgegebene Kommunikationsvorgänge des gekennzeichneten Kommunikationsteilnehmers mit diesen weiteren Kommunikationsnetzelementen beendet und/oder vorgegebene Informationen des gekennzeichneten Kommunikationsteilnehmers von diesen weiteren Kommunikationsnetzelementen gelöscht. Dies hat die vorteilhafte Wirkung, dass von der Authentifizierungseinrichtung die dem Kennzeichen zugeordnete Authentifizierungssitzungen beendet werden können, beispielsweise weil das Prepaid-Guthaben des Kommunikationsteilnehmers abgelaufen ist oder weil der Benutzeraccount des Kommunikationsteilnehmers gelöscht oder ungültig wurde. Ein weiterer Vorteil ist, dass die von den einzelnen Authentifizierungssitzungen belegten Ressourcen auf dem Diensteserver schnell wieder freigegeben werden. Eine weitere vorteilhafte Wirkung ist, dass auf diese Weise durch den Authentifizierungsserver ein Rollover der Authentifizierungssitzungen erzwungen werden kann, das heißt, dass der entsprechende Kommunikationsteilnehmer neue Authentifizierungssitzungen mit dem Authentifizierungsserver oder den Diensteservern aufbauen muss. Durch einen entsprechenden Parameter in der ersten Nachricht kann zudem kenntlich gemacht werden, dass nur die Authentifizierungssitzungen beendet werden sollen, das entsprechende Kennzeichen jedoch weiterhin gültig bleiben soll.

Nach einer weiteren vorteilhaften Weiterbildung der vorliegenden Erfindung wird das Kennzeichen des Kommunikationsteilnehmers durch die Authentifizierungseinrichtung geändert und das geänderte Kennzeichen den weiteren Kommunikationsnetzelementen in einer zweiten Nachricht mitgeteilt. Dies hat die vorteilhafte Wirkung, dass auf Initiative des Authentifizierungsservers das Kennzeichen eines Kommunikationsteilnehmers gegenüber den Diensteservern durch ein neues Kennzeichen ersetzt wird und dadurch die Privacy (Privatsphäre) des Kommunikationsteilnehmers gegenüber dem Kommunikationsnetz weiter verbessert wird, da ein Außenstehender zwei unterschiedliche Kennzeichen eines Kommunikationsteilnehmers nicht demselben Kommunikationsteilnehmer zuordnen kann. Es kann auch vorgesehen sein, für eine Gruppe von weniger vertrauten Diensteservern die Kennzeichen in einer ersten Nachricht löschen zu lassen und für vertraute Diensteserver die alten Kennzeichen in einer zweiten Nachricht durch neue Kennzeichen austauschen zu lassen. Dies hat zudem den Vorteil, dass eine große Flexibilität bei der Verwaltung der Kennzeichen von Kommunikationsteilnehmern durch die Authentifizierungseinrichtung erzielt wird.

Nach einer Weiterbildung der vorliegenden Erfindung ist als Authentifizierungseinrichtung zumindest ein Authentifizierungs-Proxyserver eines Zwischennetzes vorgesehen, der Authentifizierungsnachrichten an einen Authentifizierungsserver eines Heimnetzes des Kommunikationsteilnehmers weiterleitet. Die Kommunikationsteilnehmeridentität und das Kennzeichen des Kommunikationsteilnehmers wird in dem Authentifizierungs-Proxyserver und dem Authentifizierungsserver des Heimnetzes gespeichert. Dies hat den Vorteil, dass auch wenn sich ein Kommunikationsteilnehmer in unterschiedlichen Kommunikationsnetzen mit jeweils unterschiedlichen Authentifizierungs-Proxyservern anmeldet, die Identität des Kommunikationsteilnehmers gegenüber den jeweiligen Diensteservern weiterhin erkennbar ist.

Die erfindungsgemäße Authentifizierungseinrichtung in einem Kommunikationsnetz speichert bei einer erfolgreichen Authentifizierung eines Kommunikationsteilnehmers in dem Kommunikationsnetz Informationen über den Kommunikationsteilnehmer und zumindest ein dem Kommunikationsteilnehmer zuordenbares Kennzeichen. Bei einer Übermittlung von Daten stellt die Authentifizierungseinrichtung das den Kommunikationsteilnehmer zuordenbare Kennzeichen weiteren Kommunikationsnetzelementen bereit.

Die vorliegende Erfindung wird nachfolgend an Ausführungsbeispielen anhand der Zeichnungen näher erläutert. Es zeigen
- Figur 1: in einer schematischen Darstellung eine Kommunikationsnetzstruktur mit unterschiedlichen Zugangsnetzen,
- Figur 2: in einer schematischen Darstellung einen Verfahrensablauf mit zwei unterschiedlichen Authentifizierungen eines Kommunikationsteilnehmers,
- Figur 3: in einer schematischen Darstellung eine mögliche Zuordnung von verschiedenen Verfahrensparametern zu einem Kommunikationsteilnehmer.

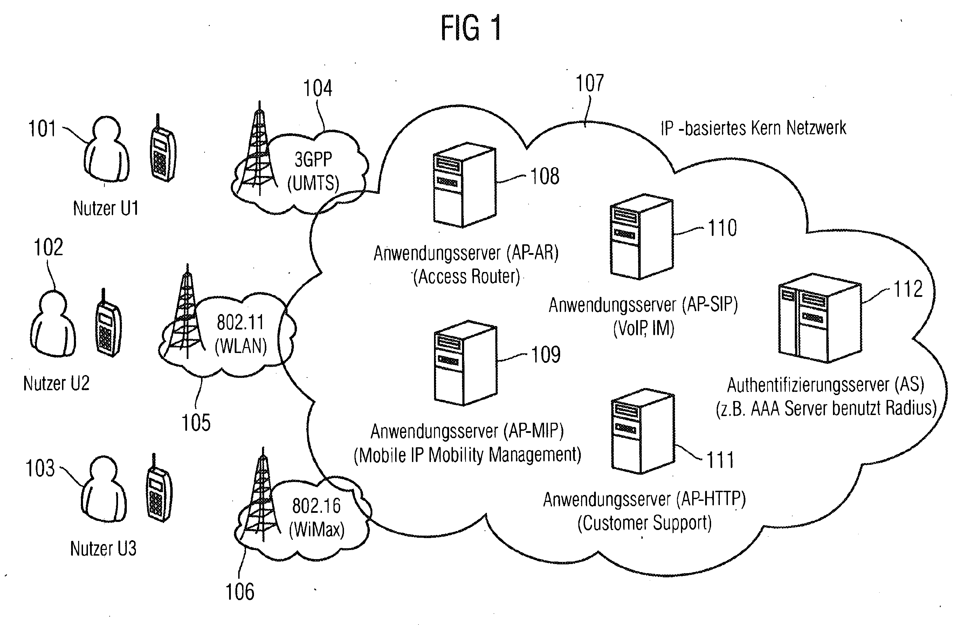

Figur 1 zeigt eine schematische Darstellung eines Netzwerkes mit drei Kommunikationsteilnehmern 101, 102, 103, die jeweils über eines von drei unterschiedlichen Zugangsnetzen 104, 105, 106 Zugriff auf ein Kernnetzwerk 107 haben. Das Kernnetzwerk 107 umfasst vier unterschiedliche Diensteserver 108, 109, 110, 111, die jeweils unterschiedliche Dienste zur Verfügung stellen. Des Weiteren umfasst das Kernnetzwerk 107 einen Authentifizierungsserver 112. Üblicherweise beginnt eine Netzwerkanmeldung eines Kommunikationsteilnehmers mit einer Authentifizierung. Hierbei würde beispielsweise der Kommunikationsteilnehmer 101 über den Authentifizierungs-Proxyserver des Zugangsnetzes 106 eine Authentifizierungsnachricht an den Authentifizierungsserver 112 seines Heimatnetzes senden. Bei erfolgreicher Authentifizierung wird für den Kommunikationsteilnehmer 101 in dem Authentifizierungsserver ein erster Schlüssel abgeleitet, welchen der Kommunikationsteilnehmer 101 für weitere Kommunikationen mit dem Zugangsnetzwerk 106 heran zieht. Gleichzeitig meldet sich der Kommunikationsteilnehmer 101 über das Zugangsnetzwerk 104 mit einem weiteren Kommunikationsendgerät bei dem Authentifizierungsserver 112 des Kernnetzwerkes an, woraufhin durch die Authentifizierungseinrichtung ein zweiter Schlüssel für den Kommunikationsteilnehmer 101 abgeleitet wird. Stellt der Kommunikationsteilnehmer 101 nun eine Diensteanforderung über das Zugangsnetzwerk 106 an den Diensteserver 108, die er mit dem ersten Schlüssel verschlüsselt hat, so fordert der Diensteserver 108 bei dem Authentifizierungsserver 112 den entsprechenden Schlüssel an und erhält das Schlüsselmaterial zusammen mit einem Kennzeichen, das den ersten Kommunikationsteilnehmer 101 kenntlich macht. Des Weiteren fordert der Kommunikationsteilnehmer 101 über das Zugangsnetzwerk 104 bei demselben Diensteserver 108 einen weiteren Dienst an, wobei die Dienstanforderung mit dem zweiten Schlüssel verschlüsselt ist. Hieraufhin erhält der Diensteserver 108 auf Aufforderung von dem Authentifizierungsserver 112 den zweiten Schlüssel zusammen mit einem Kennzeichen des ersten Kommunikationsteilnehmers 101. Auf diese Weise weiß der Diensteserver 108, dass beide Diensteanforderungen durch denselben Kommunikationsteilnehmer 101 erfolgt sind.

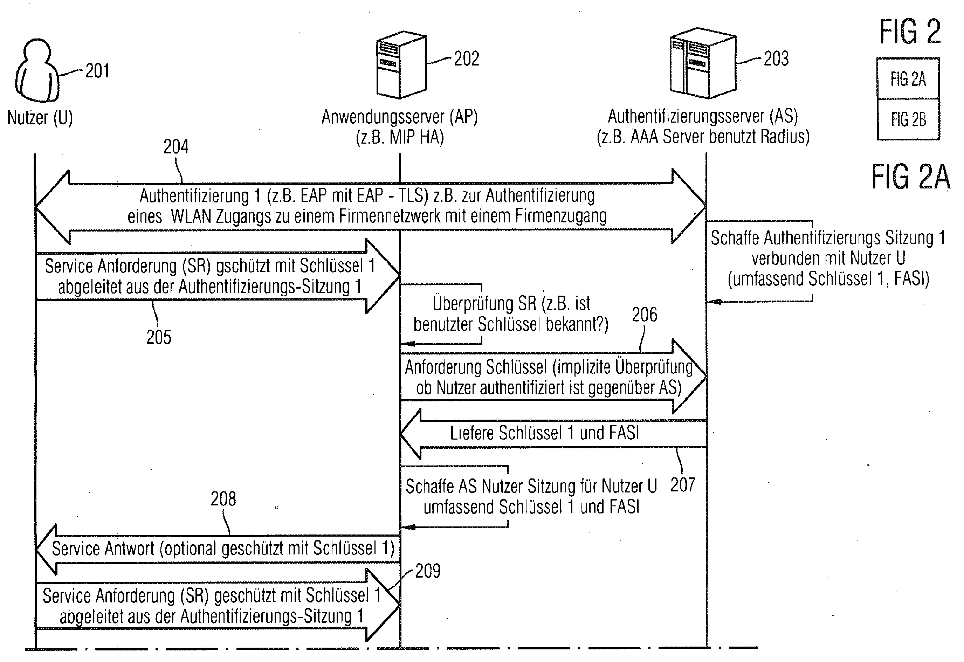

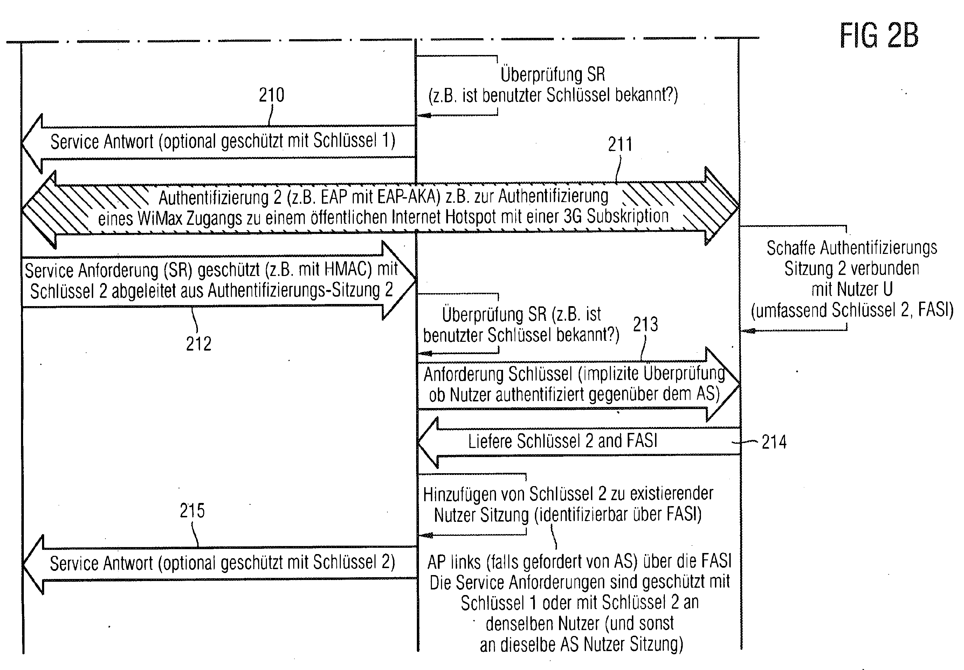

Die Figur 2 zeigt in einer schematischen Darstellung einen Verfahrensablauf bei zwei unterschiedlichen Authentifizierungen eines Kommunikationsteilnehmers. In einer ersten Authentifizierung 204 wird durch den Kommunikationsteilnehmer 201 gemäß der EAP-TLS Authentifizierungsmethode eine Authentifizierung beim Authentifizierungsserver 203 vorgenommen. Anschließend sendet der Kommunikationsteilnehmer 201 eine Dienstanfrage geschützt durch einen während der Authentifizierung abgeleiteten ersten Schlüssel 205 an den Diensteserver 202. Sofern der verwendete erste Schlüssel dem Diensteserver 202 nicht bekannt ist, fordert er diesen Schlüssel bei dem Authentifizierungsserver 203 an 206 und erhält den ersten Schlüssel 207 zusammen mit einem Kennzeichen des Kommunikationsteilnehmers 201, welches in diesem Beispiel FASI (Federated Authentication Session Identifier) genannt wird. Daraufhin antwortet der Diensteserver 202 mit einer Diensteantwort 208 an den Kommunikationsteilnehmer 201, wobei die Diensteantwort optional durch den ersten Schlüssel geschützt wird. Bei einer weiteren Diensteanfrage 209 durch den Kommunikationsteilnehmer 201, welche durch den ersten Schlüssel verschlüsselt ist, antwortet der Diensteserver 202 ohne Rückfrage beim Authentifizierungsserver 203, da ihm der erste Schlüssel nun bekannt ist 210.

In einer zweiten Authentifizierung 211 authentifiziert sich der Kommunikationsteilnehmer 201 gemäß dem EAP-AKA Authentifizierungsmethode beim Authentifizierungsserver 203, woraufhin aus der zweiten Authentifizierung 211 ein zweiter Schlüssel abgeleitet wird. Schickt der Kommunikationsteilnehmer 201 nun eine Diensteanforderung 212 an den Diensteserver 202, welche nun mit dem zweiten Schlüssel verschlüsselt ist, schickt der Diensteserver 202 eine Anforderung für diesen Schlüssel 213 an den Authentifizierungsserver 203, da ihm der zweite Schlüssel nicht bekannt ist. Im Anschluss behält der Diensteserver 202 durch den Authentifizierungsserver 203 den zweiten Schlüssel zusammen mit dem Kennzeichen FASI 214 des Kommunikationsteilnehmers 201. Aufgrund des Kennzeichen FASI erkennt der Dienstserver 202, dass es sich bei der mit dem zweiten Schlüssel verschlüsselten Diensteanforderung um denselben Kommunikationsteilnehmer wie bei der mit dem ersten Schlüssel verschlüsselten Diensteanforderung handelt. Aufgrund dessen ordnet der Diensteserver 202 den zweiten Schlüssel zu der bereits existierenden Nutzersitzung mit dem Kommunikationsteilnehmer 201 hinzu und schickt eine Diensteantwort 215 an den Kommunikationsteilnehmer 201, welche optional mit dem zweiten Schlüssel verschlüsselt ist.

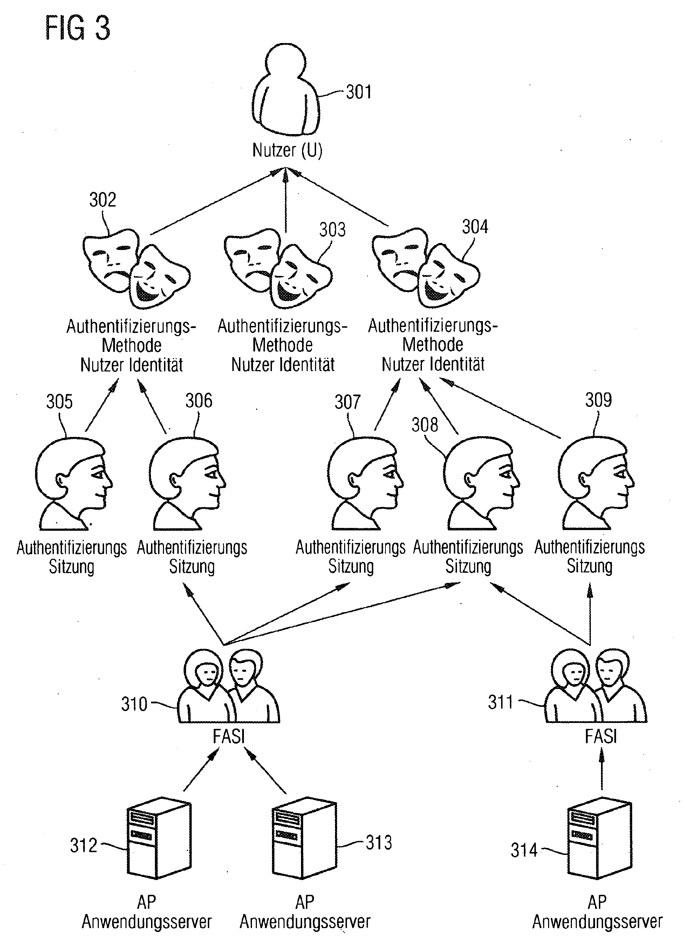

Die Figur 3 zeigt beispielhaft mögliche Abhängigkeiten zwischen für einen Kommunikationsteilnehmer 301 benutzten Kennzeichen 310 und 311 und durch den Kommunikationsteilnehmer 301 benutzte Kommunikationsteilnehmeridentifizierer 302 bis 304, Authentifizierungssitzungen 305 bis 309, und Diensteservern 312 bis 314. So ist es gemäß der vorliegenden Erfindung möglich, dass ein Kommunikationsteilnehmer 301 drei verschiedene Kommunikationsteilnehmeridentifizierer 302, 303, 304 besitzt und den ersten Kommunikationsteilnehmeridentifizierer 302 für zwei unterschiedliche Authentifizierungssitzungen 305 und 306 und den dritten Kommunikationsteilnehmeridentifizierer 304 für drei unterschiedliche Authentifizierungssitzungen 307, 308 und 309 benutzt. Die Authentifizierungseinrichtung hat die einzelnen Authentifizierungssitzungen des Kommunikationsteilnehmers 301 nun derart zugeordnet, dass für die ersten beiden Diensteserver 312 und 313 die Authentifizierungssitzungen 306, 307 und 308 gekennzeichnet durch das Kennzeichen FASI 310 auf denselben Kommunikationsteilnehmer zurückgehen und für den Diensteserver 314 die Authentifizierungssitzungen 308 und 309 gekennzeichnet durch das Kennzeichen FASI 311 auf denselben Kommunikationsteilnehmer zurückzuführen ist.

Die Vorteile der Erfindung sollen im Folgenden nochmals zusammengestellt werden:

Die vorliegende Erfindung ermöglicht, einen EAP-basierten Authentifizierungsserver als Schlüsselverteilserver für Diensteserver zu nutzen.

Der Diensteserver funktioniert mit der Erfindung auch dann, wenn ein Benutzer mehrere EAP-Authentifizierungen durchführt und als Folge nicht mehr nur ein einziger Sitzungsschlüssel für einen bestimmten Benutzer eingerichtet ist. Weitere Vorteile sind, dass es nicht mehr zu Race-Conditions kommt, bei denen es vom zeitlichen Ablauf der erfolgten Authentifizierungen abhängt, welcher Schlüssel einem Diensteserver bereitgestellt wird. Dies hätte zur Folge, dass mit einem falschen Schlüssel der Dienst nicht mehr genutzt werden könnte. Wenn in manchen Fällen der bereitgestellte oder verwendete Schlüssel aus einer anderen Authentifizierung stammt, kann der Diensteserver trotzdem diesen Schlüssel dem aktuellen Benutzer zuordnen, obwohl er vorher einen unterschiedlichen Schlüssel aus einer anderen vorangegangenen Authentifizierung verwendet hat. Dies ist essentiell für IP-basiertes Macro-Mobility-Management oder Vertical Handovers, wenn dabei eine Neu- oder Re-Authentisierung für den Netzwerkzugang erfolgt, bei dem neues Schlüsselmaterial eingerichtet wird.

Eine weitere vorteilhafte Wirkung tritt ein, wenn der Authentifizierungsserver (AAA-Server) eine FASI-Sitzung beenden will und er alle Diensteserver davon unterrichtet. Dadurch werden alle der FASI zugeordneten Authentifizierungssitzungen beendet. Dies spart Ressourcen auf den Diensteservern und es wird bei einem Ende der Sitzung vermieden, dass noch verwendbare Authentifizierungssitzungen auf Diensteservern erhalten bleiben.

Die Erfindung erleichtert es zudem, den Authentifizierungsserver für weitere Dienste zu nutzen, da er nicht die Semantik der Identifizierer eines speziellen Dienstes verstehen muss. So können wechselnde Pseudonyme oder anonyme Benutzeridentifizierer gegenüber dem Diensteserver verwendet werden. Der Diensteserver lernt nicht notwendigerweise eine dauerhaft gültige Benutzer-ID, da die virtuelle Authentifizierungssitzung FASI ein beliebiger Identifizierer sein kann.

Die vorliegende Erfindung ist nicht auf die hier beschriebenen Ausführungsbeispiele beschränkt.

## Patentansprüche

1. Verfahren zur Übermittlung von Daten in einem Kommunikationsnetz, wobei
- ein Kommunikationsteilnehmer über zumindest eine Kommunikationsteilnehmeridentität verfügt,
- der Kommunikationsteilnehmer zumindest eine Authentifizierungsnachricht, die die Kommunikationsteilnehmeridentität enthält, an eine Authentifizierungseinrichtung nach dem Extensible Authentication Protocol EAP übermittelt,
- bei erfolgreicher Authentifizierung Informationen über den Kommunikationsteilnehmer in der Authentifizierungseinrichtung gespeichert wird,
**dadurch gekennzeichnet, dass**
- ein dem Kommunikationsteilnehmer zuordenbares Kennzeichen von der Authentifizierungseinrichtung weiteren Kommunikationsnetzelementen bei einer Übermittlung von Daten bereitgestellt wird,
- die Authentifizierungseinrichtung eine erste Nachricht mit dem zuordenbaren Kennzeichen des Kommunikationsteilnehmers an eine oder eine Gruppe von weiteren Kommunikationsnetzelementen übermittelt,
- aufgrund der ersten Nachricht vorgegebene Kommunikationsvorgänge des gekennzeichneten Kommunikationsteilnehmers mit diesen weiteren Kommunikationsnetzelementen beendet werden und/oder vorgegebene Informationen des gekennzeichneten Kommunikationsteilnehmers von diesen weiteren Kommunikationsnetzelementen gelöscht werden.

2. Verfahren nach Anspruch 1, wobei
weitere Kommunikationsnetzelemente Diensteserver in dem Kommunikationsnetz sind.

3. Verfahren nach Anspruch 2, wobei
der Diensteserver ein Mobilitätsserver, insbesondere ein Mobile-IP-Home-Agent ist.

4. Verfahren nach Anspruch 1, wobei
die Kommunikationsnetze als WiMax-Netz, WLAN-Netz und/oder 3GPP-Mobilfunknetze ausgestaltet sind.

5. Verfahren nach Anspruch 1, wobei
die Authentifizierungseinrichtung bei einer Anforderung von Daten des Kommunikationsteilnehmers durch ein weiteres Kommunikationsnetzelement die angeforderten Daten zusammen mit dem zuordenbaren Kennzeichen des Kommunikationsteilnehmers übermittelt.

6. Verfahren nach Anspruch 5, wobei
die angeforderten Daten einen kryptographischen Schlüssel umfassen.

7. Verfahren nach Anspruch 6, wobei
der kryptographische Schlüssel aus der Authentifizierung des Kommunikationsteilnehmers gegenüber der Authentifizierungseinrichtung abgeleitet ist.

8. Verfahren nach Anspruch 1, wobei
die Authentifizierungseinrichtung jeweils für ein weiteres Kommunikationsnetzelement oder eine Gruppe von weiteren Kommunikationsnetzelementen ein einheitliches zuordenbares Kennzeichen des Kommunikationsteilnehmers vorsieht.

9. Verfahren nach Anspruch 1, wobei
- das zuordenbare Kennzeichen des Kommunikationsteilnehmers durch die Authentifizierungseinrichtung geändert wird,
- das geänderte Kennzeichen den weiteren Kommunikationsnetzelementen in einer zweiten Nachricht mitgeteilt wird.

10. Verfahren nach Anspruch 1, wobei
- als Authentifizierungseinrichtung zumindest ein Authentifizierungs-Proxyserver eines Zwischennetzes vorgesehen ist, der Authentifizierungsnachrichten an einen Authentifizierungsserver eines Heimnetzes des Kommunikationsteilnehmers weiterleitet,
- die Kommunikationsteilnehmeridentität und das zuordenbare Kennzeichen des Kommunikationsteilnehmers in dem Authentifi-zierungs-Proxyserver und dem Authentifizierungsserver des Heimnetzes gespeichert wird.

11. Verfahren nach Anspruch 1, wobei
die Authentifizierungsnachricht nach einem RADIUS-Datenübertragungsprotokoll übertragen werden.

12. Verfahren nach Anspruch 1, wobei
die Authentifizierungsnachrichten nach einem Diameter-Datenübertragungsprotokoll übertragen werden.

13. Authentifizierungseinrichtung in einem Kommunikations-netz, wobei
- bei einer erfolgreichen Authentifizierung eines Kommunikationsteilnehmers in dem Kommunikationsnetz zumindest ein dem Kommunikationsteilnehmer zuordenbares Kennzeichen gespeichert ist,
**dadurch gekennzeichnet, dass**
- ein dem Kommunikationsteilnehmer zuordenbares Kennzeichen von der Authentifizierungseinrichtung weiteren Kommunikationsnetzelementen bei einer Übermittlung von Daten bereitgestellt ist,
- die Authentifizierungseinrichtung eine erste Nachricht mit dem zuordenbaren Kennzeichen des Kommunikationsteilnehmers an eine oder eine Gruppe von weiteren Kommunikationsnetzelementen übermittelt,
- aufgrund der ersten Nachricht vorgegebene Kommunikations-vorgänge des gekennzeichneten Kommunikationsteilnehmers mit diesen weiteren Kommunikationsnetzelementen beendet werden und/oder vorgegebene Informationen des gekennzeichneten Kommunikationsteilnehmers von diesen weiteren Kommunikationsnetzelementen gelöscht werden.

14. Vorrichtung in einem Kommunikationsnetz, wobei
- das zuordenbare Kennzeichen nach Anspruch 13 bei einer Übermittlung von Daten von der Authentifizierungseinrichtung nach Anspruch 13 enthalten ist,
- anhand des enthaltenen Kennzeichens eine Zuordnung der übermittelten Daten zu einem Kommunikationsteilnehmer vorgenommen ist.

## Claims

1. Method for transmitting data in a communication network, wherein
- a communication subscriber has at least one communication subscriber identity,
- the communication subscriber transmits at least one authentication message, which contains the communication subscriber identity, to an authentication device in accordance with the extensible authentication protocol EAP,
- successful authentication prompts information about the communication subscriber to be stored in the authentication device,
**characterized in that**
- an identifier that can be associated with the communication subscriber is provided by the authentication device for further communication network elements when data are transmitted,
- the authentication device transmits a first message containing the associable identifier of the communication subscriber to one or a group of further communication network elements,
- the first message is taken as a basis for terminating prescribed communication processes of the identified communication subscriber with these further communication network elements and/or for erasing prescribed information of the identified communication subscriber from these further communication network elements.

2. Method according to Claim 1, wherein
further communication network elements are service servers in the communication network.

3. Method according to Claim 2, wherein
the service server is a mobility server, particularly a mobile IP home agent.

4. Method according to Claim 1, wherein
the communication networks are embodied as a WiMax network, a WLAN network and/or 3GPP mobile radio networks.

5. Method according to Claim 1, wherein
the authentication device responds to a request for data of the communication subscriber by a further communication network element by transmitting the requested data together with the associable identifier of the communication subscriber.

6. Method according to Claim 5, wherein
the requested data comprise a cryptographic key.

7. Method according to Claim 6, wherein
the cryptographic key is derived from the authentication of the communication subscriber to the authentication device.

8. Method according to Claim 1, wherein
the authentication device provides a standard associable identifier of the communication subscriber for a further communication network element or a group of further communication network elements in each case.

9. Method according to Claim 1, wherein
- the associable identifier of the communication subscriber is changed by the authentication device,
- the changed identifier is communicated to the further communication network elements in a second message.

10. Method according to Claim 1, wherein
- the authentication device provided is at least one authentication proxy server of an intermediate network, which authentication proxy server forwards authentication messages to an authentication server of a home network of the communication subscriber,
- the communication subscriber identity and the associable identifier of the communication subscriber are stored in the authentication proxy server and the authentication server of the home network.

11. Method according to Claim 1, wherein
the authentication messages are transmitted in accordance with a RADIUS data transmission protocol.

12. Method according to Claim 1, wherein
the authentication messages are transmitted in accordance with a Diameter data transmission protocol.

13. Authentication device in a communication network, wherein
- successful authentication of a communication subscriber prompts the communication network to have stored at least one identifier that can be associated with the communication subscriber,
**characterized in that**
- an identifier that can be associated with the communication subscriber is provided by the authentication device for further communication network elements when data are transmitted,
- the authentication device transmits a first message containing the associable identifier of the communication subscriber to one or a group of further communication network elements,
- the first message is taken as a basis for terminating prescribed communication processes of the identified communication subscriber with these further communication network elements and/or for erasing prescribed information of the identified communication subscriber from these further communication network elements.

14. Apparatus in a communication network, wherein
- the associable identifier according to Claim 13 is contained in a transmission of data by the authentication device according to Claim 13,
- the contained identifier is taken as a basis for associating the transmitted data with a communication subscriber.

## Revendications

1. Procédé de transmission de données dans un réseau de communication, dans lequel
- un abonné de communication dispose d'au moins une identité d'abonné de communication,
- l'abonné de communication transmet au moins un message d'authentification contenant l'identité d'abonné de communication à un dispositif d'authentification selon le protocole EAP (Extensible Authentication Protocol),
- si l'authentification a abouti, des informations sur l'abonné de communication sont stockées dans le dispositif d'authentification,
**caractérisé en ce que**
- un identificateur attribuable à l'abonné de communication est fourni par le dispositif d'authentification à d'autres éléments du réseau de communication lors d'une transmission de données,
- le dispositif d'authentification transmet un premier message contenant l'identificateur attribuable de l'abonné de communication à un ou un groupe d'autres éléments du réseau de communication,
- du fait du premier message il est mis fin à des communications prédéfinies de l'abonné de communication identifié avec ces autres éléments du réseau de communication et/ou des informations prédéfinies de l'abonné de communication identifié sont effacées par ces autres éléments du réseau de communication.

2. Procédé selon la revendication 1, dans lequel d'autres éléments du réseau de communication sont des fournisseurs de services dans le réseau de communication.

3. Procédé selon la revendication 2, dans lequel le fournisseur de services est un fournisseur de mobilité, en particulier un mobile-IP-home-agent.

4. Procédé selon la revendication 1, dans lequel les réseaux de communication sont conçus comme réseau WiMax, réseau WLAN et/ou réseaux mobiles 3GPP.

5. Procédé selon la revendication 1, dans lequel le dispositif d'authentification, lorsque des données de l'abonné de communication sont demandées par un autre élément du réseau de communication, transmet les données demandées conjointement avec l'identificateur attribuable de l'abonné de communication.

6. Procédé selon la revendication 5, dans lequel les données demandées comprennent une clé cryptographique.

7. Procédé selon la revendication 6, dans lequel la clé cryptographique est dérivée de l'authentification de l'abonné de communication par rapport au dispositif d'authentification.

8. Procédé selon la revendication 1, dans lequel le dispositif d'authentification prévoit chaque fois pour un autre élément du réseau de communication ou un groupe d'autres éléments du réseau de communication un identificateur attribuable uniforme de l'abonné de communication.

9. Procédé selon la revendication 1, dans lequel
- l'identificateur attribuable de l'abonné de communication est modifié par le dispositif d'authentification,
- l'identificateur modifié est communiqué aux autres éléments du réseau de communication dans un second message.

10. Procédé selon la revendication 1, dans lequel
- il est prévu comme dispositif d'authentification au moins un serveur proxy d'authentification d'un réseau intermédiaire, qui transfère des messages d'authentification à un serveur d'authentification d'un réseau domestique de l'abonné de communication,
- l'identité d'abonné de communication et l'identificateur attribuable de l'abonné de communication sont stockés dans le serveur proxy d'authentification et le serveur d'authentification du réseau domestique.

11. Procédé selon la revendication 1, dans lequel les messages d'authentification sont transmis suivant un protocole de transmission de données RADIUS.

12. Procédé selon la revendication 1, dans lequel les messages d'authentification sont transmis suivant un protocole de transmission de données Diameter.

13. Dispositif d'authentification dans un réseau de communication, dans lequel
- si l'authentification d'un abonné de communication dans le réseau de communication a abouti, au moins un identificateur attribuable à l'abonné de communication est stocké, **caractérisé en ce que**
- un identificateur attribuable à l'abonné de communication est fourni par le dispositif d'authentification à d'autres éléments du réseau de communication lors d'une transmission de données,
- le dispositif d'authentification transmet un premier message contenant l'identificateur attribuable de l'abonné de communication à un ou un groupe d'autres éléments du réseau de communication,
- du fait du premier message il est mis fin à des communications prédéfinies de l'abonné de communication identifié avec ces autres éléments du réseau de communication et/ou des informations prédéfinies de l'abonné de communication identifié sont effacées par ces autres éléments du réseau de communication.

14. Dispositif dans un réseau de communication, dans lequel
- l'identificateur attribuable selon la revendication 13 est contenu lors d'une transmission de données par le dispositif d'authentification selon la revendication 13,
- à l'aide de l'identificateur contenu, une attribution des données transmises à un abonné de communication est effectuée.
